# EUROPEAN PATENT SPECIFICATION

(11) **EP 1 736 356 B1**
(45) Date of publication and mention of the grant of the patent: **30.04.2008**
(21) Application number: 06009049.5
(22) Date of filing: 02.05.2006
(51) Int. Cl.: B60N 2/24, B60N 2/06, B60N 2/14, A61G 3/08

(54) **A vehicle fitting**
Eine Fahrzeugeinrichtung
Un équipement de véhicule

(30) Priority: 04.05.2005 GB 0509086
(43) Date of publication of application: 27.12.2006
(73) Proprietor: NMI Safety Systems Ltd., London N17 0YX (GB)
(72) Inventor: Sawdy, Michael Barry, Hertfordshire SG13 8DU (GB)
(74) Representative: Beattie, Alex Thomas Stewart

(56) References cited:
- EP-A1- 0 972 671
- WO-A-02/091979
- WO-A-20/04041586

## Description

**THE PRESENT INVENTION** relates to a vehicle fitting and more particularly relates to a vehicle fitting suitable for use in a vehicle, such as, e.g. a minibus or a coach or an ambulance, which is to be utilised by a number of passengers of different types, some of whom may be handicapped.

There are many vehicles which are used by a number of passengers, some of whom may be handicapped. Vehicles of this type are frequently operated by Local Councils, or Care Homes and the vehicles may transport patients who have various types of physical and/or mental handicap, some of whom may be in wheelchairs.

The provision of a seat fitting for a vehicle of this type presents the fitting designer with many challenges. An ideal seat fitting has a squab and a backrest in a conventional format so that the seat can be utilised by a seat occupant who has no physical handicap, the seat fitting being configured to provide a degree of protection to the seat occupant if the vehicle is involved in a front impact or in a rear impact.

Also the ideal seat fitting should be adaptable for use with a wheelchair. A seat fitting of this type may be designed so that the squab of the seat may be moved away from its first or "ordinary" position, with the backrest then being positioned so that the space in front of the backrest is unobstructed. Then a wheelchair may be brought up against the fitting, with a padded part of the fitting lying immediately behind the backrest of the wheelchair, and in such a way that a safety belt provided on the fitting may embrace the occupant of the wheelchair. In this way the safety belt may provide protection in the case of a front impact of the vehicle, and the part of the fitting located behind the backrest of the wheelchair will minimise the risk of the wheelchair occupant moving rearwardly out of the wheelchair in the event that a rear impact should occur.

Wheelchairs come in many different sizes, adult wheelchairs being relatively broad and some child wheelchairs being very narrow. The rearwardly projecting handles on the wheelchairs may thus have very different spacings between them.

The space available within a typical vehicle as used for the transport of handicapped people is generally limited and is often necessary to move a wheelchair, together with the wheelchair occupant, from the rear of the vehicle past a seat fitting of the type described above before the wheelchair can be manoeuvred into position with the backrest of the wheel chair located just in front of part of the fitting.

The design of the ideal fitting would take all of these factors into account.

Whilst various fittings have been proposed previously, all commercially available fittings have one or more drawbacks.

The present invention seeks to provide an improved fitting.

According to this invention there is provided a fitting for a motor vehicle, the fitting comprising a support, the support being provided with a seat squab and a backrest, the squab being moveable from an initial position in which the squab projects forwardly from the support, to a position in which the squab does not obstruct the space in front of the backrest, the support being rotatably mounted relative to a base assembly, the base assembly being mounted for lateral movement.

Preferably the base assembly is mounted on a platform, there being low friction or rolling elements to enable the base assembly to move relative to the platform, the base assembly carrying dovetail elements, the dovetail elements being accommodated within corresponding channels formed in the platform.

Conveniently cover strips are provided to cover the channels in the platform, the cover strips passing round guides provided at each end of the channel in the platform and being accommodated in a recess extending beneath the platform.

Advantageously the base assembly defines a plurality of radially spaced locator recesses, the support carrying a plunger selectively engageable with a recess when the support is in a selected one of a plurality of rotational spaced positions.

Preferably the plunger is mounted on a foot pedal actuated mechanism to withdraw the plunger from one of said recesses.

Conveniently the support comprises a tubular element, the lower end of the tubular element being provided with a bearing to support the tubular element rotationally relative to the base assembly, the upper end of the tubular element carrying the squab and the backrest.

Preferably the squab is removably mounted to the rest of the fitting.

Conveniently the backrest comprises a backrest element which is carried by a support frame and which is moveable forwardly relative to the support frame.

Advantageously the backrest is relatively wide at the top, but has a lesser width at a lower position.

The fitting may have a clamping mechanism to clamp the base assembly in a selected lateral position.

In one embodiment a clamping mechanism is provided to bring the dovetail elements into engagement with the channel to clamp the base assembly in a selected lateral position.

Conveniently the fitting is provided with a winch, the winch comprising at least one drum, part of the drum forming a flange provided with peripheral ratchet teeth, there being a ratchet to engage the ratchet teeth, there being a foot pedal, the foot pedal being spring biased to an initial position, the foot pedal incorporating a dog resiliently biased into engagement with the ratchet teeth, the foot pedal being actuable against said spring bias to rotate the drum when the dog is in engagement with the ratchet teeth, the dog forming part of a dog member, another part of the dog member forming a cam follower, there being a cam positioned to engage the cam follower such that on elevation of the foot pedal above a predetermined position the cam follower will engage the cam and retract the dog from the teeth.

In order that the invention may be more readily understood, and so that further features thereof may be appreciated, the invention will now be described, by way of example with reference to the accompanying drawings in which:
FIGURE 1 is a front prospective view of a fitting in accordance with the invention,
FIGURE 2 is a rear view of the fitting of Figure 1,
FIGURE 3 is an enlarged rear view of part of the fitting of Figures 1 and 2,
FIGURE 4 is a cross sectional view through part of the fitting of Figures 1 to 3,
FIGURE 5 is a view of foot pedal forming part of the fitting, with parts thereof shown in phantom,
FIGURE 6 is a side view of a cam,
FIGURE 7 is an enlarged view of part the fitting,
FIGURE 8 is an exploded view of the part of the fitting in the form of a squab, and

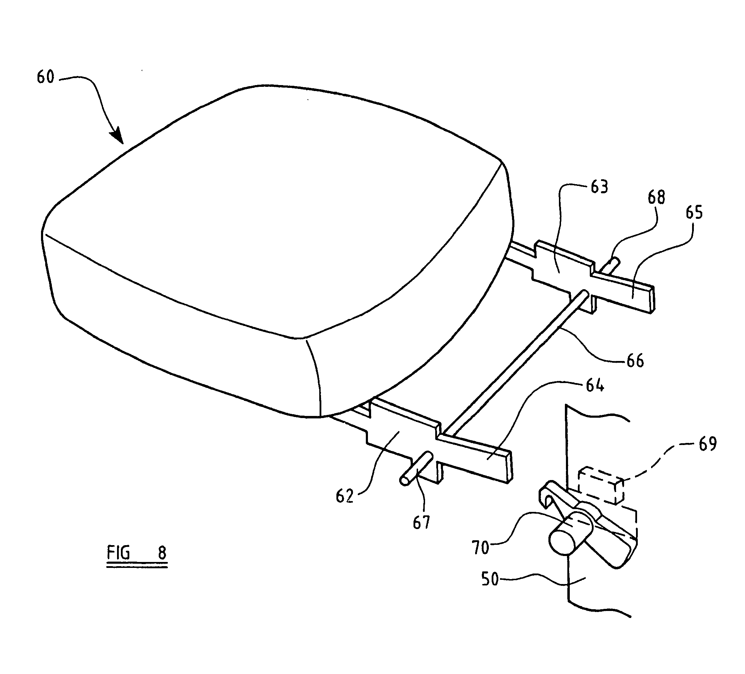

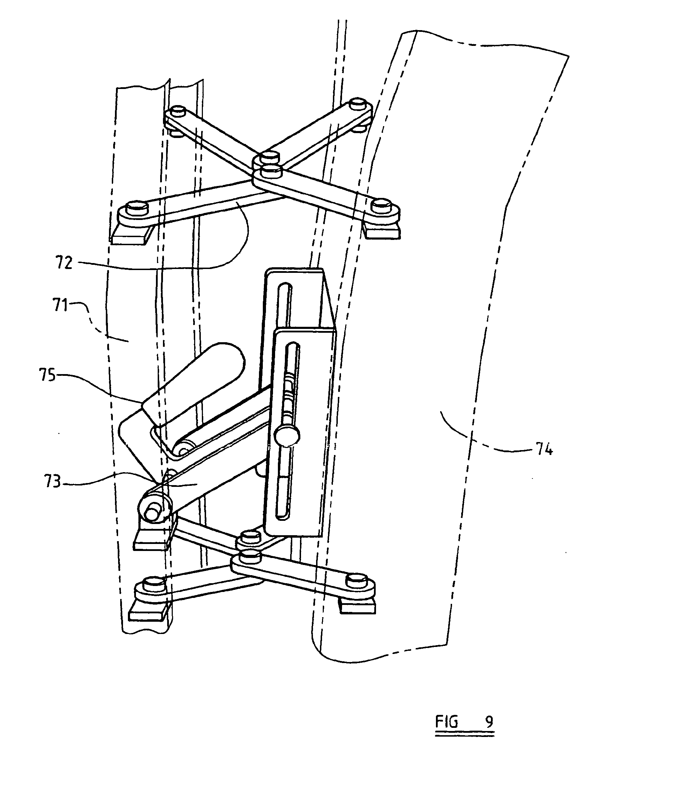

FIGURE 8 is a side view of part of the fitting in the form of a backrest.

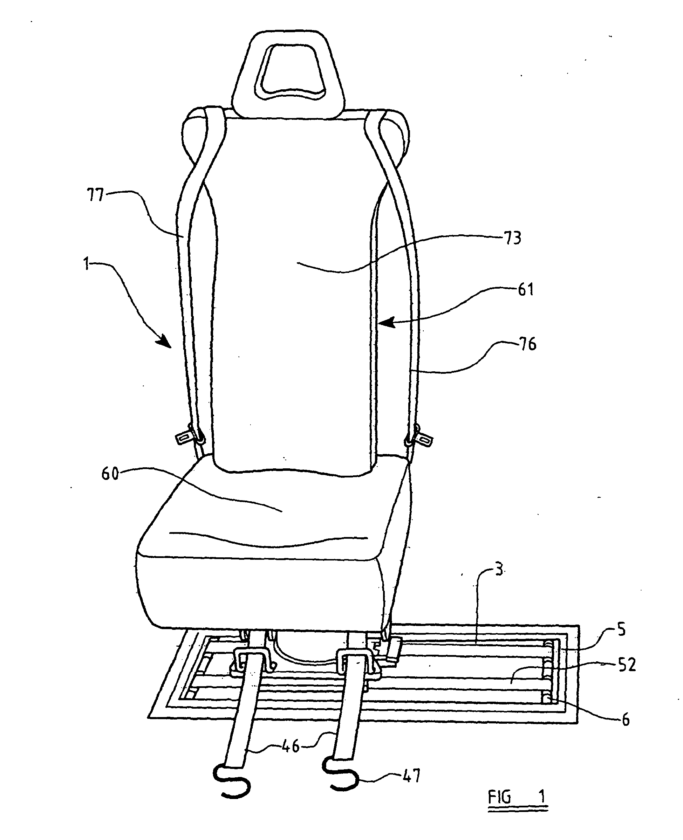

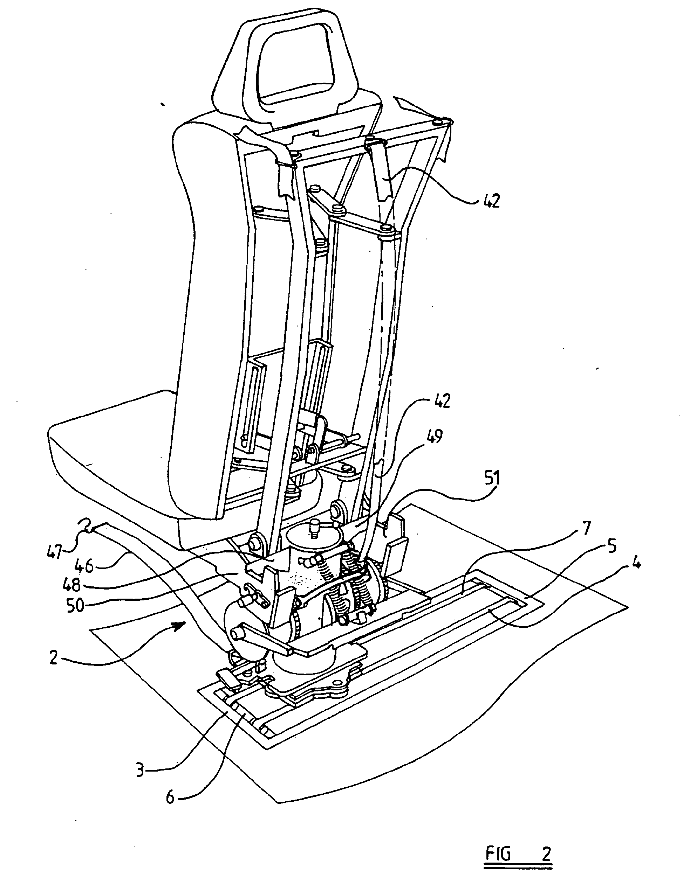

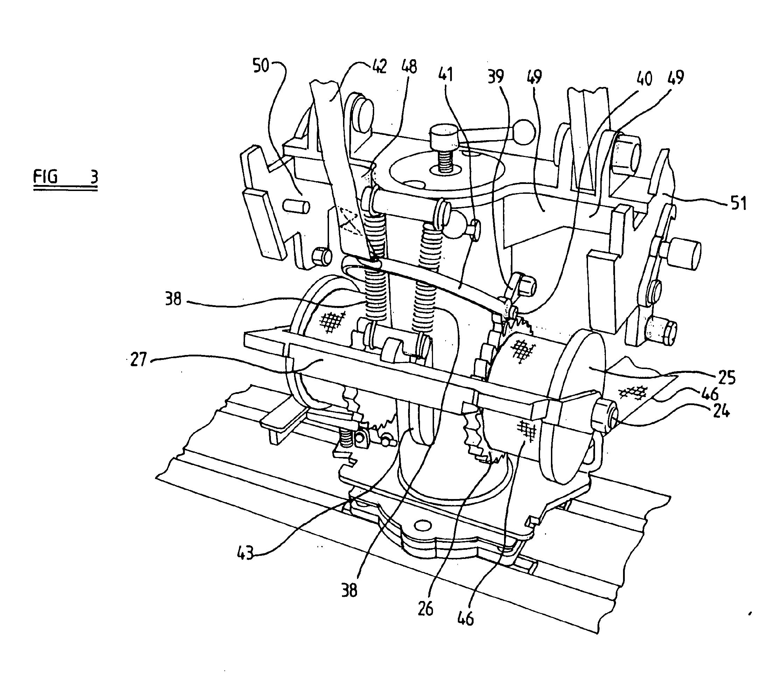

Referring to the drawings, Figures 1 to 4 illustrate a fitting 1 for use in a motor vehicle. The fitting 1, as can be seen most clearly in Figure 2, takes the form of a seat and comprises a support 2 which supports the seat-part of the fitting above a platform 3. As will become clear from the following description the fitting 1 may move laterally relative to the platform 3 and the seat part may move rotationally about a vertical axis defined by the support 2.

The platform 3 is provided with two parallel transversely extending channels 4 of "dovetail" shape formed in the upper surface of the platform 3. The platform 3 is in the form of a plate, which is received within a surrounding frame 5. The frame 5 is configured to be secured to the floor of a vehicle such as a bus or ambulance. The channels 4 are formed in the upper surface of the platform plate 3. The platform plate 3 carries, at each end of each of the dovetail-shaped grooves 4, a roller or guide 6, which extends to a recess 7 provided in the under-surface of the platform plate 5. The recess 7 extends across the under surface of the platform plate 3 to the other roller or guide 6. The rollers or guides 6 and the recesses 7 are provided to accommodate a cover-band as will be described below.

The support 2 includes a base assembly to rest on the platform 3, the base assembly comprising a lower plate 8. Depending from the under-surface of the lower plate 8 are dovetail elements 9 which are received within the dovetail-shaped channels 4. Also formed in the under-surface of the lower plate 8 are bearing chambers 10 which contain roller bearings, the axes of the roller bearings being perpendicular to the axes of the dovetail elements 9, to facilitate rolling the support across the platform in a direction parallel with the axes of the longitudinal dovetail channels 4.

In a modified embodiment, instead of roller bearings being provided low-friction devices such as, polytetrafluoraethylene pads are provided to facilitate lateral movement of the base assembly across the platform.

A threaded boss 11 extends upwardly from the centre of the base plate 8, there being an axial bore extending through the boss and the base plate.

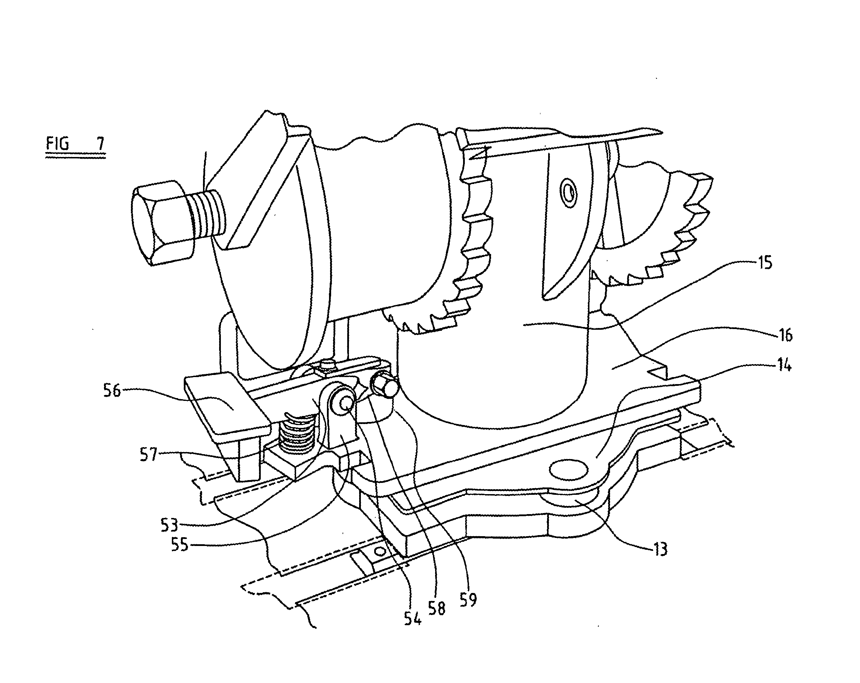

Surrounding the threaded boss and resting on top of the lower plate is a support ring 12, and located about the periphery of the support ring 12 are a plurality of spacer collars 13. Resting on top of the support ring 12 and the spacer collars 13 is an upper plate 14, the upper plate 14 having a central aperture which surrounds a threaded boss 11. The upper plate 14 is apertured above each of the collars 13 to expose the hollow interiors of the collars (as can be seen in Figure 7).

A principal component of the support 2 is a support column, the main part of which comprises a vertical tubular element 15. The lower end of the tubular element 15 is closed with a lower closure plate 16. The periphery of the closure plate 16 forms a flange extending outwardly beyond the tubular element 15. The closure plate 16 has a central aperture which accommodates the threaded boss 11. A nut 17 within the interior of the tubular element 15 secures the closure plate 16 to the threaded boss 11. The under-surface of the closure plate 16 is provided with an annular groove 19, which surrounds the aperture in the plate, a series of ball bearings 20 being retained within the groove and being trapped between the lower surface of the closure plate 19 and the upper surface of the upper plate 14 thus forming a bearing which enables the tubular element 15 to rotate relative to the base assembly. The nut 17 is tightened to such an extent that there is minimal play between the tubular element 15 and the base assembly while permitting the tubular element 15 to rotate relatively freely with reference to the base assembly.

It is to be appreciated that the support ring 12 and the supporting collars 13 located between the lower plate 8 and the upper plate 14 provide support for the upper plate 14 so that the upper plate 14 does not become distorted as a consequence of the forces applied thereto by the ball bearings 20.

The upper end of the tubular element 15 is closed with a closure plate 21, the closure plate 21 having a centrally located threaded bore 22. A threaded shaft 23 engages the threaded bore 22 and is provided, at is upper end (which projects above the closure plate 21) with an actuating handle. The lower end of the threaded shaft 23 is located adjacent the lower surface of the lower plate 9 of the base assembly, just above the platform 3.

As will become clearer from the following description the threaded shaft 23 forms a clamping mechanism which can be actuated to clamp the base assembly at a selected lateral position by bringing the depending dove tail elements 8 into engagement with the dove tail shaped channels, thus generating a friction effect which will prevent lateral movement of the base assembly.

At approximately mid point of the vertical tubular element 15, a transversely extending shaft 24 is provided which extends to either side of the tubular element. Mounted on each end of the shaft is a winch drum 25, each winch drum 25 having, immediately adjacent the tubular element 15, a toothed flange 26.

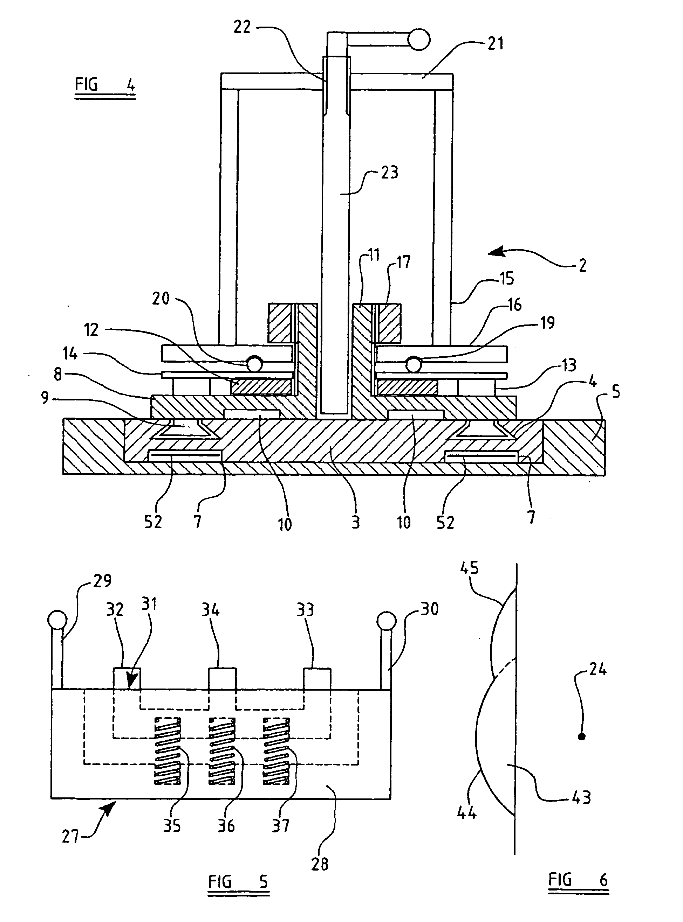

A foot pedal 27, illustrated in Figure 5, is provided. The foot pedal 27 has a rectangular foot plate 28, the foot plate 28 carrying, at either edge thereof, respectively forwardly directed arms 29, 30. The arms 29, 30 are pivotally mounted, at their forward most ends, to the ends of the shaft 24 which are outboard of the winch drums 25.

Contained within the rectangular foot pedal (see Figure 5) is a spring-biased dog element 31. The foot plate 28 of the foot pedal 27 is of hollow or "sandwich" construction, and contains within its interior a generally "E"-shaped dog element 31, the element being located so that two protruding arms 32, 33 of the element form dogs which engage the toothed flanges 26 provided on the winch drums 25, and a centrally located cam follower 34. The dog member is resiliently biased by three springs 35, 36, 37 contained within the interior of the foot plate 28 so that the dogs 32, 22 and the cam follower 34 extend out of the edge of the foot plate 28 closest to the tubular element 15.

A spring arrangement 38 is provided to bias the foot pedal upwardly. In the illustrated embodiment the spring is a tension spring extending from the foot pedal 27 to the tubular element 15. In another embodiment the spring is a torsion spring, for example a spring which has a coiled part which extends around the shaft 24.

A pair of ratchet elements 39 are provided pivotally mounted on a shaft 40 which extends transversely of the tubular element 15 at a position above the shaft 24. The two ratchet elements 39 are interconnected by a control hoop 41 which partially surrounds the tubular element 15, and is actuated by an actuating strap 42.

The tubular element 15 is provided with a cam which is centrally located to be in alignment with the cam follower 34. The cam, shown as cam 43, is in the form of a vertically extending plate centrally located on the exterior of the tubular element 15, between the winch drums 25. The cam 43 has a first portion 44 which has a centre of curvature coincident with the axis of the shaft 24, and a further, upper portion, which projects beyond the curvature of the first portion of the cam.

Attached to the winch drums 25 are two lengths of belt 46 each of which terminates with an appropriate karabiner 47. Each length of belt 46, as it leaves the winch drum, passes through a belt guide provided at a forward edge of the lower closure plate 16, as can be seen in Figure 1. The lengths of belt are thus guided forwardly substantially at floor level.

The upper part of the vertical tubular element 15 carries two outwardly directed support struts 48, 49, each of which carries, at its outer end, a respective forwardly directed side arm 50, 51. As will be described below, the side arms 50, 51 effectively support a seat-like structure.

At this stage it is to be understood that the entire support 2, carrying the seat-like structure (which will be described below) can move laterally relative to the platform 3 and the seat structure can rotate about a central vertical axis. In order to minimise the risk of the dovetail channels 4 becoming blocked in any way, (which might hinder the lateral movement) cover-bands 52 are provided which extend, from one side of the base assembly, along the top of each dovetail-shaped channel 4, around the roller or guide 6 provided at the end of the channel, through the recess 7 provided on the under-surface of the platform plate, around the roller or guide 6 provided at the other end of the dovetail-shaped groove, and back to the other side of the base assembly.

It is thus to be appreciated that, as the base assembly moves across the platform, the cover-band will also move, but the cover-band will always cover the open mouth of the respective dovetail-shaped channel in the platform plate 3.

Mounted on an extending flange formed by the closure plate 16, provided at the lower end of the vertical tubular element 15 is a see-saw mounted lever 53, supported on a shaft 54 which is carried by two spaced-apart upstanding lugs 55. A foot pedal 56 is provided at one end of the see-saw lever 53 and a spring 57 is provided to bias the foot pedal upwardly. The other end of the see-saw lever 53 carries a plunger 58 which extends downwardly through an aperture 59 provided in the closure plate 16, the plunger being positioned to be aligned (in different rotational positions of the tubular element 15) with the hollow interiors of the spacing collars 13, which are accessible through the apertures provided in the upper plate 14 of the base assembly.

Consequently it is to be understood that, initially, the plunger 58 will be engaged within the interior of a specific spacer collar 13, thus preventing rotation of the tubular element 15. However, upon depressing the foot pedal 56 the plunger 58 will be raised to such an extent that the plunger becomes disengaged from the interior of the spacer collar 13, and then it will be possible to rotate the tubular element 15, for example by 90°, thus realigning the plunger 58 with another space collar 13. After the foot pedal is released the plunger will be accommodated within the interior of the spacer collar 13 that it becomes aligned with, thus again preventing rotation of the tubular element 15.

Whilst it is envisaged that four evenly spaced hollow spacer collars will be provided, thus giving the tubular element 4 possible relative rotational positions, more (or fewer) spacer elements may be provided if desired.

Consequently it is to be understood that by actuating the foot pedal and applying an appropriate manual rotational force to the fitting 1, the fitting may be rotated about a vertical axis, and will then be locked in a new position.

In an initial condition of the support, the threaded shaft 25 will be tightened with the handle provided at the upper end of the shaft 23 so that the shaft firmly engages the upper surface of the platform plate 3 and so that, consequently, an upward force is applied, by the tubular element 15 to the lower closure plate 16 and thus, by engagement of the nut 17 with the threaded boss 11, an upward force is applied to the lower plate 8 thus drawing the dovetail elements 9 upwardly into firm engagement with the converging upper part of the dovetail grooves 4, thus preventing lateral movement of the support 2. Here it is to be appreciated that by operating the handle to withdraw the threaded shaft 23 from engagement with the platform 5, effectively the dovetail elements 9 will be lowered slightly within the dovetail channels 4 and the rollers provided in the bearing chambers 10 formed on the under-surface of the lower plate 8 will engage the upper surface of the platform plate 3, thus enabling the support 2 and the seat-like structure carried on the support 2 to be moved laterally across the platform in an easy manner. When the support 2 is in a new, desired position, the handle provided on the threaded shaft 23 may be actuated so that the threaded shaft 23 is again brought into firm engagement with the platform plate 3, thus again bringing the dovetail elements 9 into firm engagement with the converging part of the dovetail grooves 4 and again locking the support firmly in position.

The seat-like structure is of a known form and corresponds with the seat-like structure disclosed in WO 2004/041586, which is incorporated herein by reference.

The seat-like structure comprises a squab 60 and a seat back assembly 61. The squab 60 is releasably connected to the rest of the fitting so that the squab may, when desired, be placed in position to form the squab of the seat and, when desired, may be removed, so that the fitting is then squab-less. The space in front of the backrest is then "empty" and is not obstructed by the squab.

The squab 60 has two rearwardly extending support arms 62,63, each support arm terminating with a rearwardly extending engagement finger 64,65. Extending laterally, relative to the support arms, is a transversally extending rod 66, having ends 67,68 which project beyond the support arms to form mounting lugs.

Seat-squab-finger engaging formations 69 are provided on the inner side of each of the side arms 50,51, and mounted on an exterior part of each side arm is a hook unit 70. The fingers 64,65 of the squab may be engaged with the formations 69 and the hooks 70 may be engaged with the projecting lugs 67,68 to secure the seat squab in position. The seat squab 60 may, however, readily be removed, by releasing the hooks and disengaging the fingers 64,65 from the formations 70..

The side arms 50,51 also carry a seat back mounting frame 71 which extends substantially vertically upwardly. The seat back mounting frame is provided with an upper linkage 72 and a lower linkage 73 which support a padded back rest 74. An over-dead-centre handle-actuated drive mechanism 75 is provided which can be actuated to drive the padded back rest unit 74 forwardly or rearwardly relative to the frame 70. The position of the seat back unit may thus be adjusted as desired.

The padded backrest unit 74 has a greater width at the top, than it does at a position beneath the top.

The seat back carries two safety belts 76,77.

The described fitting may be used as a conventional seat or may be used in conjunction with a wheelchair.

If the fitting is to be used as a conventional seat, the lateral and rotational position of the fitting is adjusted, in the manner described, and the padded back rest 74 is positioned appropriate relative to the squab 60. The seat may then be used by a seat occupant, and a seat occupant may be restrained by the two safety belts 76,77.

If the seat is to be used by a wheelchair user, initially the squab 60 is removed. The wheelchair is then positioned in front of the backrest 3. The Karabiners 47 on the straps 46 are attached to appropriate parts of the wheelchair. The foot pedal 27 is then driven downwardly. The spring biased dogs 31,33 engage the toothed flanges 26 on the winch drums 25, thus causing winch drums to rotate. As the winch drums rotate so the ratchets 39 effect a ratcheting movement across the ratchet teeth provided on the toothed flanges 26.

When the foot pedal is totally depressed, the foot pedal is released. The spring arrangement 38 will then tend to draw the foot pedal back up to its initial position. As the foot pedal effects this movement the dogs 31,32 effect a ratcheting movement across the teeth, and the drums are held firmly by the ratchets 39.

This operation has served to draw in part of the belts 46, which extend to the Karabiners 47. Thus the wheelchair is drawn into a position in which the back of the wheelchair is up against the padded backrest 73. It is to be appreciated that the foot pedal may need to be depressed several times in order to draw in the entire length of the belt 46, and to draw the wheelchair tightly up against the fitting.

When the backrest of the wheelchair is pressed up against the padded backrest 73, the safety belts 76,77 may be used by the wheelchair user, to provide a degree of safety to the wheelchair user.

It is to be appreciated that even if the wheelchair is relatively narrow the wheelchair may be accommodated against the backrest because the handles provided on the backrest of the wheelchair will pass to either side of the relatively narrow lower part of the backrest 73 of the fitting.

When the wheelchair user wishes to leave the vehicle, the foot pedal may be pressed down slightly to relieve the tension applied to the ratchet 39 by the tooth flanges 26 of the winch drums 25, and then the actuating strap 42 may be pulled upwardly so that the control hoop 41 pulls the ratchet teeth 39 upwardly thus disengaging the ratchets 39 from the ratchet teeth. The winch drums 25 may still, however, not be free to rotate due to the engagement of the dogs 31,32 within the foot pedal 27 with the ratchet teeth. If the foot pedal, however, is pushed upwardly from its position of rest, the cam follower will follow the uppermost part 45 of the cam 43, and this will serve to force the dog member 31 back into the foot plate 28, thus disengaging the dogs 32,33 from the toothed flanges 26 of the winch drums 25. The winch drums may now rotate freely to pay out the straps 46.

It is to be appreciated that the fitting as described above may be found to be extremely versatile. The fitting may be adjusted between a multitude of positions and may be used by able-bodied people and also by wheelchair users. If the fitting is used within a vehicle which has a compact interior, it will be possible for the squab of the fitting to be removed, for the fitting to be rotated and for the fitting to be moved laterally, for example up adjacent one side of the vehicle, so that the fitting, when in this form, provides a very minimum of obstruction to personnel entering or leaving the vehicle. It would be possible, for example, with the fitting in this condition to manoeuvre a wheelchair past the fitting so that the wheelchair is in front of the fitting. The fitting may then be moved laterally away from the side wall of the vehicle towards the centre of the vehicle, and the fitting may be rotated so that the fitting is then in a ideal position for use by the wheelchair user.

It is to be understood that while, in the described embodiment, the squab is removable from the fitting, in an alternative embodiment the squab may simply be movable between an extended operative position and a retracted position in which it does not obstruct the space in front of the backrest.

The backrest 74 may move forwardly if the fitting is to be used with an electric wheelchair having a battery housing in a lower part of the back of the wheelchair. The protruding battery housing may be accommodated, consequently, beneath the lowermost part of the backrest, and the backrest may firmly engage the rearmost part of the wheelchair behind the spine of the occupant of the wheelchair.

It is to be appreciated that whilst the fitting may be used with a relatively narrow wheelchair, because of the relatively narrow width of the lowermost part of the backrest, nevertheless, guides for the two seat belts may be located at the uppermost part of the backrest and may be appropriately spaced apart for use by an adult.

When used in this specification and claims, the terms "comprises" and "comprising" and variations thereof mean that the specified features, steps or integers are included. The terms are not to be interpreted to exclude the presence of other features, steps or components.

## Claims

1. A fitting (1) for a motor vehicle, the fitting (1) comprising a support (2), the support (2) being provided with a seat squab (60)and a backrest (61), the squab (60) being moveable from an initial position in which the squab (60) projects forwardly from the support (2), to a position in which the squab (60) does not obstruct the space in front of the backrest (61), **characterised in that** the support (2) is rotatably mounted relative to a base assembly of the fitting, the base assembly of the fitting being mounted for lateral movement.

2. A fitting (1) according to Claim 1, wherein the base assembly is mounted on a platform (3), there being low friction or rolling elements to enable the base assembly to move relative to the platform (3), the base assembly carrying dovetail elements (9), the dovetail elements (9) being accommodated within corresponding channels (4) formed in the platform (3).

3. A fitting (1) according to Claim 2, wherein cover strips (52) are provided to cover the channels (4) in the platform (3), the cover strips (52) passing round guides provided at each end of the channel (4) in the platform (3) and being accommodated in a recess (7) extending beneath the platform (3).

4. A fitting (1) according to any one of the preceding Claims, wherein the base assembly defines a plurality of radially spaced locator recesses, the support (2) carrying a plunger (58) selectively engageable with a recess (59) when the support (2) is in a selected one of a plurality of rotational spaced positions.

5. A fitting (1) according to Claim 4, wherein the plunger (58) is mounted on a foot pedal (56) actuated mechanism to withdraw the plunger (58) from one of said recesses (59).

6. A fitting (1) according to any one of the preceding Claims, wherein the support (2) comprises a tubular element (15), the lower end of the tubular element (15) being provided with a bearing to support the tubular element (15) rotationally relative to the base assembly, the upper end of the tubular element (15) carrying the squab (60) and the backrest (61).

7. A fitting (1) according to any one of the preceding Claims, wherein the squab (60) is removably mounted to the rest of the fitting (1).

8. A fitting (1) according to any one of the preceding Claims, wherein the backrest (61) comprises a backrest element (74) which is carried by a support frame and which is moveable forwardly relative to the support frame.

9. A fitting (1) according to any one of the preceding Claims, wherein the backrest (61) is relatively wide at the top, but has a lesser width at a lower position.

10. A fitting (1) according to any one of the preceding Claims having a clamping mechanism (22,23) to clamp the base assembly in a selected lateral position.

11. A fitting (1) according to Claim 2 or any one of Claims 3 to 9 dependent thereon, wherein a clamping mechanism (22,23) is provided to bring the dovetail elements (9) into engagement with the channel (4) to clamp the base assembly in a selected lateral position.

12. A fitting (1) according to any one of the preceding Claims provided with a winch, the winch comprising at least one drum (25), part of the drum (25) forming a flange (26) provided with peripheral ratchet teeth, there being a ratchet (39) to engage the ratchet teeth, there being a foot pedal (27), the foot pedal (27) being spring biased to an initial position, the foot pedal (27) incorporating a dog (32,33) resiliently biased into engagement with the ratchet teeth, the foot pedal (27) being actuable against said spring bias to rotate the drum (25) when the dog (32,33) is in engagement with the ratchet teeth, the dog (32,33) forming part of a dog member (31), another part of the dog member (31) forming a cam follower (34), there being a cam (43) positioned to engage the cam follower(34) such that on elevation of the foot pedal (27) above a predetermined position the cam follower (34) will engage the cam (43) and retract the dog (32,33) from the teeth.

## Patentansprüche

1. Einrichtung (1) für ein Kraftfahrzeug, wobei die Einrichtung.(1) eine Stütze (2) umfasst, die Stütze (2) mit einem Sitzpolster (60) und einer Rückenlehne (61) ausgestattet ist, das Polster (60) aus einer anfänglichen Position heraus bewegbar ist, in welcher das Polster (60) von der Stütze (2) her nach vorne vorragt, in eine Position, in welcher das Polster (60) den Platz vor der Rückenlehne (61) nicht versperrt, **dadurch gekennzeichnet, dass** die Stütze (2) relativ zu einem Träger-Zusammenbau der Einrichtung drehbar montiert ist, wobei der Träger-Zusammenbau der Einrichtung für eine seitliche Bewegung montiert ist.

2. Einrichtung (1) nach Anspruch 1, wobei der Träger-Zusammenbau auf einer Plattform (3) montiert ist, wo geringe Reibung oder Rollelemente zur Ermöglichung einer Bewegung des Träger-Zusammenbaus relativ zu der Plattform (3) vorhanden sind, wobei der Träger-Zusammenbau Schwalbenschwanzelemente (9) tragt, wobei die Schwalbenschwanzelemente (9) in entsprechenden in der Plattform (3) gebildeten Kanälen (4) untergebracht sind.

3. Einrichtung (1) nach Anspruch 2, wobei Abdeckstreifen (52) vorgesehen sind, um die Kanäle (4) in der Plattform (3) abzudecken, wobei die Abdeckstreifen (52) um an jedem Ende des Kanals (4) in der Plattform (3) vorgesehene Führungen herumreichen und in einer sich unterhalb der Plattform (3) erstreckenden Aussparung (7) untergebracht sind.

4. Einrichtung (1) nach einem der vorhergehenden Ansprüche, wobei der Träger-Zusammenbau eine Vielzahl von radial beabstandeten Positionierungsaussparungen abgrenzt, wobei die Stütze (2) einen Plungerkolben (58) trägt, der selektiv in eine Aussparung (59) eingreifen kann, sobald sich die Stütze (2) in einer ausgewählten von einer Vielzahl beabstandeter Drehpositionen befindet.

5. Einrichtung (1) nach Anspruch 4, wobei der Plungerkolben (58) auf einem durch ein Fußpedal (56) betätigten Mechanismus zum Zurückziehen des Plungerkolbens (58) aus einer der Aussparungen (59) montiert ist.

6. Einrichtung (1) nach einem der vorhergehenden Ansprüche, wobei die Stütze (2) ein röhrenförmiges Element (15) umfasst, wobei das untere Ende des röhrenförmigen Elements (15) mit einem hager vorgesehen ist, um das röhrenförmige Element (15) drehbar relativ zu dem Träger-Zusammenbau zu stützen, wobei das obere Ende des röhrenförmigen Elements (15) das Polster (60) und die Rückenlehne (61) trägt.

7. Einrichtung (1) nach einem der vorhergehenden Ansprüche, wobei das Polster (60) abnehmbar an dem Rest der Einrichtung (1) montiert ist.

8. Einrichtung (1) nach einem der vorhergehenden Ansprüche, wobei die Rückenlehne (61) ein Rückenlchnenelement (74) umfasst, welches von einem Stützrahmen getragen wird und welches nach vorne relativ zu dem Stützrahmen bewegbar ist.

9. Einrichtung (1) nach einem der vorhergehenden Ansprüche, wobei die Rückenlehne (61) oben relativ breit ist, in einer unteren Position jedoch eine geringere Breite aufweist.

10. Einrichtung (1) nach einem der vorhergehenden Ansprüche, die einen Feststellmechanismus (22, 23) aufweist, um den Träger-Zusammenbau in einer ausgewählten seitlichen Position festzustellen.

11. Einrichtung (1) nach Anspruch 2 oder einem der davon abhängigen Ansprüche 3 bis 9, wobei ein Feststellmechanismus (22, 23) vorgesehen ist, um die Schwalbenschwanzelemente (9) in Eingriff mit dem Kanal (4) zu bringen, um den Träger-Zusammenbau in einer ausgewählten seitlichen Position festzustellen.

12. Einrichtung (1) nach einem der vorhergehenden Ansprüche, welche mit einer Winde ausgestattet ist, wobei die Winde mindestens eine Trommel (25) umfasst, ein Teil der Trommel (25) einen mit peripheren Sperrzähnen ausgestatteten Flansch (26) bildet, dort eine Sperrvorrichtung (39) vorhanden ist, um in die Sperrzähne einzugreifen, wobei dort ein Fußpedal (27) vorhanden ist, das Fußpedal (27) von einer Feder in eine anfängliche Position vorgespannt wird, das Fußpedal (27) einen Mitnehmer (32, 33) enthält, der in Eingriff mit den Sperrzähnen elastisch vorgespannt ist, wobei das Fußpedal (27) gegen die Federvorspannung zum Drehen der Trommel (25) betätigbar ist, sobald der Mitnehmer (32, 33) in Eingriff mit den Sperrzähnen ist, wobei der Mitnehmer (32, 33) einen Teil eines Mitnehmerbauteils (31) bildet, ein weiterer Teil des Mitnehmerbauteils (31) einen Nockenstößel (34) bildet, dort ein Nocken (43) vorhanden ist, der positioniert ist, um in den Nockenstößel (34) so einzugreifen, dass der Nockenstößel (34) beim Anheben des Fußpedals (27) über eine vorher bestimmte Position in den Nocken (43) eingreift und den Mitnehmer (32,33) aus den Zähnen zurückzieht.

## Revendications

1. Un équipement (1) destiné à un véhicule à moteur, l'équipement (1) comprenant un support (2), le support (2) étant muni d'un siège (60) et d'un dossier (61), le siège (60) étant déplaçable à partir d'une position initiale dans laquelle le siège (60) fait saillie vers l'avant à partir du support (2) vers une position dans laquelle le siège (60) n'obstrue pas l'espace devant le dossier (61), **caractérisé en ce que** le support (2) est monté rotatif par rapport à une structure de base de l'équipement, la structure de base de l'équipement étant montée de façon à permettre un mouvement latéral.

2. Un équipement (1) selon la Revendication 1, où la structure de base est montée sur une plate-forme (3), équipé d'éléments roulants ou à frottement réduit afin de permettre à la structure de base de se déplacer par rapport à la plate-forme (3), la structure de base comportant des éléments à queue d'aronde (9), les éléments à queue d'aronde (9) étant logés dans des rainures correspondantes (4) formées dans la plate-forme (3).

3. Un équipement (1) selon la Revendication 2, où des baguettes de couverture (52) sont fournies pour recouvrir les rainures (4) de la plate-forme (3), les baguettes de couverture (52) passant autour de guides fournis à chaque extrémité de la rainure (4) de la plate-forme (3) et étant logées dans un évidement (7) s'étendant sous la plate-forme (3).

4. Un équipement (1) selon l'une quelconque des Revendications précédentes, où la structure de base définit une pluralité de pieds de positionnement espacés radialement, le support (2) comportant une clavette (58) engageable de manière sélective dans un évidement (59) lorsque le support (2) se trouve dans une position sélectionnée d'une pluralité de positions angulaires espacées.

5. Un équipement (1) selon la Revendication 4, où la clavette (58) est montée sur un mécanisme actionné par un levier de commande à pied (56) destiné à retirer la clavette (58) de l'un desdits évidements (59).

6. Un équipement (1) selon l'une quelconque des Revendications précédentes, où le support (2) comprend un élément tubulaire (15), l'extrémité inférieure de l'élément tubulaire (15) étant munie d'un roulement destiné à soutenir l'élément tubulaire (15) de manière rotative par rapport à la structure de base, l'extrémité supérieure de l'élément tubulaire (15) comportant le siège (60) et le dossier (61).

7. Un équipement (1) selon l'une quelconque des Revendications précédentes, où le siège (60) est monté de manière amovible par rapport au reste de l'équipement (1).

8. Un équipement (1) selon l'une quelconque des Revendications précédentes, où le dossier (61) comprend un élément de dossier (74) qui est fixé sur un cadre-support et qui est déplaçable vers l'avant par rapport au cadre-support.

9. Un équipement (1) selon l'une quelconque des Revendications précédentes, où le dossier (61) est relativement large au sommet mais possède une largeur moindre à une position inférieure.

10. Un équipement (1) selon l'une quelconque des Revendications précédentes possédant un mécanisme de blocage (22, 23) permettant de bloquer la structure de base dans une position latérale sélectionnée.

11. Un équipement (1) selon la Revendication 2 ou l'une quelconque des Revendications 3 à 9 dépendante de celle-ci, où un mécanisme de blocage (22, 23) est fourni de façon à placer les éléments à queue d'aronde (9) en prise avec la rainure (4) afin de bloquer la structure de base dans une position latérale sélectionnée.

12. Un équipement (1) selon l'une quelconque des Revendications précédentes équipé d'un cabestan, le cabestan comprenant au moins un tambour (25), une partie du tambour (25) formant une jante en saillie (26) munie de dents triangulaires périphériques, d'un cliquet (39) permettant de s'engager dans les dents triangulaires, d'un levier de commande à pied (27), le levier de commande à pied (27) étant rappelé par un ressort vers une position initiale, le levier de commande à pied (27) comportant un crabot (32, 33) placé de manière flottante en prise avec les dents triangulaires, le levier de commande à pied (27) étant actionnable contre ledit rappel de ressort de façon à faire pivoter le tambour (25) lorsque le crabot (32, 33) est en prise avec les dents triangulaires, le crabot (32, 33) formant une partie d'un élément de crabot (31), une autre partie de l'élément de crabot (31) formant un galet de came (34), une came (43) étant positionnée de façon à s'engager dans le galet de came (34) de façon que, après élévation du levier de commande à pied (27) au-dessus d'une position prédéterminée, le galet de came (34) s'engage dans la came (43) et retire le crabot (32, 33) des dents.
